# EUROPÄISCHE PATENTSCHRIFT

(11) **EP 1 578 649 B1**
(45) Veröffentlichungstag und Bekanntmachung des Hinweises auf die Patenterteilung: **02.08.2006**
(21) Anmeldenummer: 03814440.8
(22) Anmeldetag: 11.07.2003
(51) Int. Cl.: B60S 1/24, B60S 1/18

(54) **ANTRIEBSANORDNUNG EINER WISCHVORRICHTUNG FÜR SCHEIBEN VON KRAFTFAHRZEUGEN**
DRIVE ARRANGEMENT FOR A WIPER DEVICE FOR WINDOWS OF MOTOR VEHICLES
ENSEMBLE D'ENTRAINEMENT POUR UN DISPOSITIF ESSUIE-GLACES DE VEHICULE A MOTEUR

(30) Priorität: 23.12.2002 DE 10261926
(43) Veröffentlichungstag der Anmeldung: 28.09.2005
(73) Patentinhaber: ROBERT BOSCH GMBH, 70442 Stuttgart (DE)
(72) Erfinder: METZ, Ulrich, 77855 Achern (DE)
(86) Internationale Anmeldenummer: PCT/DE2003/002334
(87) Internationale Veröffentlichungsnummer: WO 2004/060731

(56) Entgegenhaltungen:
- EP-A- 0 769 436
- WO-A-01/87678
- DE-A- 19 953 515
- "WISCHERANTRIEB MIT REVERSIERTECHNIK" ATZ AUTOMOBILTECHNISCHE ZEITSCHRIFT, FRANCKH'SCHE VERLAGSHANDLUNG. STUTTGART, DE, Bd. 98, Nr. 3, 1. März 1996 (1996-03-01), Seite 173 XP000558449 ISSN: 0001-2785

## Beschreibung

Die Erfindung betrifft eine Antriebsanordnung einer Wischvorrichtung für Scheiben von Kraftfahrzeugen mit den im Oberbegriff des Patentanspruch 1 genannten Merkmalen. Eine solche Antriebsanordnung ist aus der WO 01/87678 A bzw. aus der EP 0 769 436 A bekannt.

### Stand der Technik

Es sind verschiedene Ausführungen von Antriebsanordnungen für Scheibenwischvorrichtungen von Kraftfahrzeugen bekannt. Eine bekannte Anordnung besteht in einer Umsetzung eines rotatorischen Antriebs eines Elektromotors in eine Schwenkbewegung einer Wischerarmachse mit zwei Endstellungen. Diese Umsetzung erfolgt typischerweise mittels eines Kurbelgetriebes.

Da eine Scheibenwischvorrichtung meist zwei in paralleler Richtung schwenkbare Wischerarme umfasst, ist ein zweiter Wischerarm mit dem ersten mittels einer Kurbelschwinge oder dergleichen gekoppelt. Die Kinematik dieser Koppelung kann unterschiedliche Bewegungsbahnen der beiden Wischerarme berücksichtigen, da zur Vergrößerung eines Wischfeldes auf der Scheibe oftmals einer der beiden Wischerarme einen größeren Schwenkwinkel beschreibt als der andere.

### Vorteile der Erfindung

Eine erfindungsgemäße Antriebsanordnung einer Wischvorrichtung für Scheiben von Kraftfahrzeugen umfasst wenigstens zwei, über ein Kurbelgetriebe miteinander gekoppelte schwenkbare Wischerarme. Bei dieser Anordnung ist einer der Wischerarme direkt mit einer Abtriebswelle eines elektromotorischen Antriebs gekoppelt. Vorzugsweise umfasst dieser elektromotorische Antrieb ein gleichförmig übersetzendes Getriebe. Weiterhin ist vorzugsweise vorgesehen, dass ein Elektromotor des elektromotorischen Antriebs eine Drehrichtungsumkehr aufweist. Diese Drehrichtungsumkehr sorgt jeweils an den Endlagen der Wischerarme für eine Umkehr der Drehrichtung des Antriebsmotors.

Die erfindungsgemäße Antriebsanordnung ermöglicht gegenüber einem herkömmlichen Wischerantrieb die Einsparung eines Zwischengetriebes, da einer der Wischerarme direkt, d.h. ohne ein dazwischen angeordnetes ungleichmäßig übersetzendes Zwischengetriebe angetrieben wird. Der andere Wischerarm wird vorzugsweise von der gleichen Motorwelle auf konventionelle Weise über ein ungleichmäßig übersetzendes Zwischengetriebe angetrieben. Eine Koppelung der beiden Wischerarmwellen kann insbesondere mittels einer Kurbelschwinge erfolgen, so dass die Wischerarme eine gleichsinnige Bewegungsbahn beschreiben, wobei die Bewegungsbahnen je nach Kinematik parallel zueinander sein können.

Vorzugsweise weist der elektromotorische Antrieb eine Sensorik zur Erfassung der Endlagen der Wischerarme auf. Diese Sensorik kann für die erforderliche Drehrichtungsumkehr des Antriebsmotors sorgen. Eine solche Sensorik ist darüber hinaus dafür geeignet, eine Geschwindigkeitsregelung für die Wischerarme zu ermöglichen. So kann eine Ausführungsform der Erfindung vorsehen, dass die Geschwindigkeit der Wischerarme jeweils in Nähe der Endlagen reduziert wird, so dass insgesamt ein harmonischer Bewegungsablauf ermöglicht ist.

Weitere vorteilhafte Ausgestaltungen der Erfindung ergeben sich aus den übrigen, in den abhängigen Ansprüchen genannten Merkmalen.

### Zeichnungen

Die Erfindung wird nachfolgend in bevorzugten Ausführungsbeispielen anhand der zugehörigen Zeichnungen näher erläutert. Dabei zeigt:
- Figur 1: eine Prinzipdarstellung einer erfindungsgemäßen Antriebsanordnung für eine Scheibenwischvorrichtung,
- Figur 2: eine schematische Draufsicht der Antriebsanordnung gemäß Figur 1 und
- Figur 3: ein beispielhafter Geschwindigkeitsverlauf eines Wischerarms der erfindungsgemäßen Antriebsanordnung.

### Beschreibung der Ausführungsbeispiele

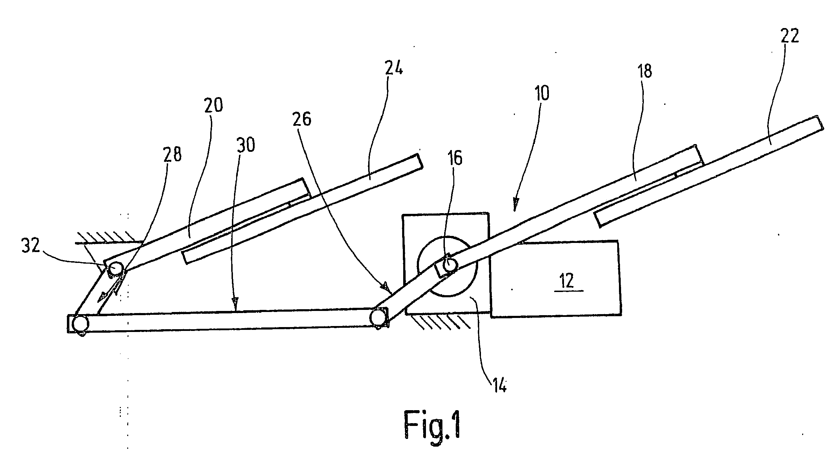

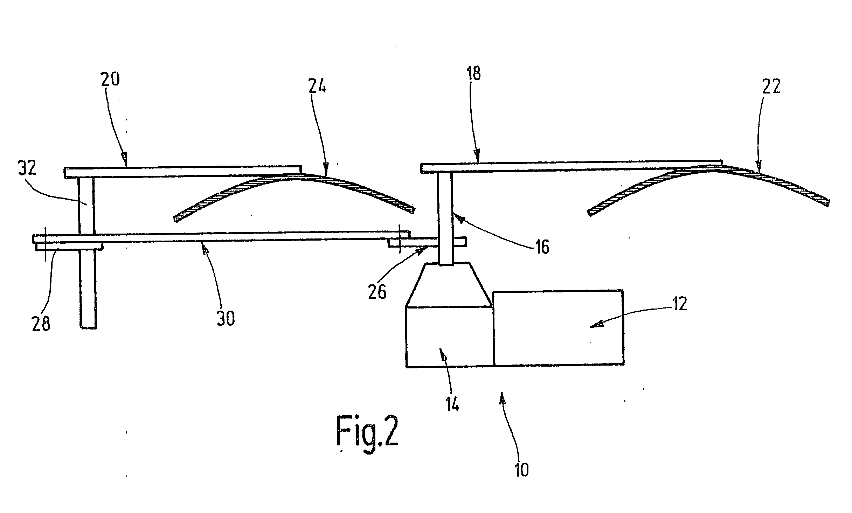

Anhand der Figuren 1 und 2 ist ein Ausführungsbeispiel einer erfindungsgemäßen Antriebsanordnung einer Wischvorrichtung für Scheiben von Kraftfahrzeugen illustriert. Ein erster Wischerarm 18 ist mit einer Abtriebswelle 16 eines elektromotorischen Antriebs 10 verbunden. Dieser Antrieb 10 umfasst einen elektrischen Antriebsmotor 12 und ein mit diesem gekoppeltes gleichförmig übersetzendes Getriebe 14, dessen Abtriebswelle 16 den ersten Wischerarm 18 antreibt. An einem gegenüber liegenden freien Ende des ersten Wischerarms ist ein erstes Wischblatt 22 angeordnet, das bei einer alternierenden Bewegung des Wischerarms 18 die Scheibe des Kraftfahrzeugs (nicht dargestellt) überstreicht.

Der elektromotorische Antrieb 10 weist vorzugsweise eine Sensorik (nicht dargestellt) zur Erfassung der Endlagen des Wischerarms 18 auf und sorgt an den Endlagen jeweils für eine Drehrichtungsumkehr des Antriebsmotors 12, die über das gleichförmig übersetzende Getriebe 14 jeweils auf die Abtriebswelle 16 übertragen wird.

Die Sensorik ist vorzugsweise weiterhin in der Lage, die Geschwindigkeit des Wischerarms 18 in Nähe der beiden Endlagen jeweils geringfügig zu drosseln, um ggf. einen gleichmäßigen und materialschonenden Bewegungsablauf zu ermöglichen.

An der Abtriebswelle 16 ist weiterhin eine Kurbel 26 angelenkt, welche einen Hebelarm für eine daran gelenkig gelagerte Kurbelschwinge 30 darstellt. Ein anderes Ende der Kurbelschwinge 30 ist gelenkig mit einer Schwinge 28 verbunden, die mit einer zweiten Welle 32 gekoppelt ist. Die zweite Welle 32 ist annähernd parallel zur Abtriebswelle 16 ausgerichtet und trägt einen zweiten Wischerarm 20, an dessen freiem Ende ein zweites Wischblatt 24 angeordnet ist. Das aus Kurbel 26, Kurbelschwinge 30 und Schwinge 28 bestehende Kurbelgetriebe sorgt für eine Übertragung der Schwenkbewegungen der Abtriebswelle 16 auf die zweite Welle 32 und damit auf den zweiten Wischerarm 20.

Je nach den gewünschten Bewegungsbahnen können die Kurbel 26 und die Schwinge 28 unterschiedlich lange Hebelarme aufweisen, so dass bspw. der erste Wischerarm 18 einen Schwenkwinkel von 110 Grad und der zweite Wischerarm 20 nur von 95 Grad aufweisen kann. Auch ist es durch die Länge der Kurbelschwinge 30 im Verhältnis zum Abstand der beiden Wellen 16 und 32 möglich, einen permanenten Winkelversatz der beiden Wischerarme 18 und 20 einzustellen.

Die erfindungsgemäße Antriebsanordnung ermöglicht den Verzicht auf ein ungleichförmig übersetzendes Getriebe zwischen Antriebsmotor 12 und Abtriebswelle 16, wie es bei herkömmlichen Wischerantrieben notwendig ist. Das gleichförmig übersetzende Getriebe 14 muss lediglich für eine Drehzahlanpassung sorgen und kann dadurch deutlich kompakter sein als ein ungleichförmig übersetzendes Getriebe. Je nach den verfügbaren Platzverhältnissen im Fahrzeug kann Bauraum eingespart werden.

Mit der heute verfügbaren Elektronik ist eine elektronische Drehrichtungsumkehr sehr einfach und zuverlässig darstellbar. Eine solche elektronische Regelung der Schwenkbewegungen ist deutlich kostengünstiger als die Verwendung von mechanischen Teilen wie einem ungleichförmig übersetzenden Getriebe.

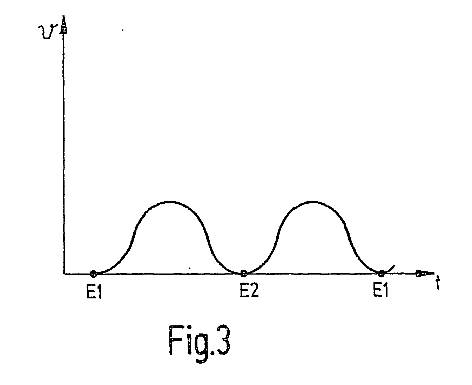

Figur 3 verdeutlicht ein qualitatives Geschwindigkeitsdiagramm eines der beiden Wischerarme 18 oder 20, der jeweils an seinen beiden Endlagen E1 und E2 verlangsamt wird, um eine möglichst gleichmäßige und materialschonende Schwenkbewegung der Wischerarme zu ermöglichen. Die Abszisse zeigt hierbei die Zeit t und die Ordinate die Drehgeschwindigkeit v einer der beiden Wellen 16 oder 32, jeweils in qualitativer Darstellung. Beim Durchlaufen jeder der Endlagen E1 und E2 ist jeweils eine Drehrichtungsumkehr (nicht dargestellt) vorgesehen.

## Patentansprüche

1. Antriebsanordnung einer Wischvorrichtung für Scheiben von Kraftfahrzeugen, mit wenigstens zwei, über ein Kurbelgetriebe miteinander gekoppelte schwenkbare Wischerarmen (18, 20), **dadurch gekennzeichnet, dass** einer der Wischerarme (18) direkt mit einer Abtriebswelle (16) eines elektromotorischen Antriebs (10) gekoppelt ist.

2. Antriebsanordnung nach Anspruch 1, **dadurch gekennzeichnet, dass** der elektromotorische Antrieb (10) ein gleichförmig übersetzendes Getriebe (14) umfasst.

3. Antriebsanordnung nach Anspruch 1 oder 2, **dadurch gekennzeichnet, dass** ein elektrischer Antriebsmotor (12) des Antriebs (10) eine Drehrichtungsumkehr aufweist.

4. Antriebsanordnung nach Anspruch 3, **dadurch gekennzeichnet, dass** an Endlagen der Wischerarme (18, 20) jeweils eine Drehrichtungsumkehr des elektromotorischen Antriebs (10) vorgesehen ist.

5. Antriebsanordnung nach einem der voranstehenden Ansprüche, **dadurch gekennzeichnet, dass** der elektromotorische Antrieb (10) eine Sensorik zur Erfassung der Endlagen aufweist.

6. Antriebsanordnung nach einem der voranstehenden Ansprüche, **dadurch gekennzeichnet, dass** der elektromotorische Antrieb (10) eine Geschwindigkeitsregelung aufweist.

7. Antriebsanordnung nach Anspruch 6, **dadurch gekennzeichnet, dass** die Geschwindigkeitsregelung jeweils eine Reduzierung der Drehgeschwindigkeit des Antriebs (10) nahe der Endlagen der Wischerarme (18, 20) vorsieht.

8. Antriebsanordnung nach einem der voranstehenden Ansprüche, **dadurch gekennzeichnet, dass** die wenigstens zwei Wischerarme (18, 20) über eine Kurbelschwinge (30) gekoppelt sind.

9. Antriebsanordnung nach Anspruch 8, **dadurch gekennzeichnet, dass** die beiden Wischerarme (18, 20) eine gleichsinnige Bewegungsbahn aufweisen.

10. Antriebsanordnung nach einem der voranstehenden Ansprüche, **dadurch gekennzeichnet, dass** die wenigstens zwei Wischerarme (18, 20) eine annähernd parallele Bewegungsbahn aufweisen.

## Claims

1. Drive arrangement for a wiper device for windows of motor vehicles, with at least two pivotable wiper arms (18, 20) which are coupled to each other via a crank mechanism, **characterized in that** one of the wiper arms (18) is coupled directly to an output shaft (16) of an electric motor drive (10).

2. Drive arrangement according to Claim 1, **characterized in that** the electric motor drive (10) comprises a gear mechanism (14) with a uniform transmission ratio.

3. Drive arrangement according to Claim 1 or 2, **characterized in that** an electric drive motor (12) of the drive (10) has a reversal of the direction of rotation.

4. Drive arrangement according to Claim 3, **characterized in that** a respective reversal of the direction of rotation of the electric motor drive (10) is provided at the end positions of the wiper arms (18, 20).

5. Drive arrangement according to one of the preceding claims, **characterized in that** the electric motor drive (10) has a sensor for detecting the end positions.

6. Drive arrangement according to one of the preceding claims, **characterized in that** the electric motor drive (10) has a speed control.

7. Drive arrangement according to Claim 6, **characterized in that** the speed control in each case provides a reduction in the rotational speed of the drive (10) in the vicinity of the end positions of the wiper arms (18, 20).

8. Drive arrangement according to one of the preceding claims, **characterized in that** the at least two wiper arms (18, 20) are coupled via a crank arm (30).

9. Drive arrangement according to Claim 8, **characterized in that** the two wiper arms (18, 20) have a path of movement in the same direction.

10. Drive arrangement according to one of the preceding claims, **characterized in that** the at least two wiper arms (18, 20) have an approximately parallel path of movement.

## Revendications

1. Ensemble d'entraînement d'un dispositif d'essuie-glace de vitre de véhicules automobiles comportant au moins deux bras d'essuie-glace (18, 20) pivotants, couplés par une transmission à manivelle,
**caractérisé en ce que**
l'un des bras d'essuie-glace (18) est couplé directement à l'axe moteur (16) d'un moyen d'entraînement à moteur électrique (10).

2. Ensemble d'entraînement selon la revendication 1,
**caractérisé en ce que**
le moyen d'entraînement à moteur électrique (10) utilise une transmission (14) à démultiplication uniforme.

3. Ensemble d'entraînement selon les revendications 1 ou 2,
**caractérisé en ce que**
le moteur électrique (12) du moyen d'entraînement (10) est à sens de rotation réversible.

4. Ensemble d'entraînement selon la revendication 3,
**caractérisé en ce qu'**
au niveau des positions de fin de course des bras d'essuie-glace (18, 20) il est prévu chaque fois une inversion de sens de rotation du moyen d'entraînement à moteur électrique (10).

5. Ensemble d'entraînement selon l'une des revendications précédentes,
**caractérisé en ce que**
le moyen d'entraînement par moteur électrique (10) comporte des capteurs pour détecter les positions de fin de course.

6. Ensemble d'entraînement selon l'une quelconque des revendications précédentes,
**caractérisé en ce que**
le moyen d'entraînement à moteur électrique (10) comporte une régulation de vitesse.

7. Ensemble d'entraînement selon la revendication 6,
**caractérisé en ce que**
le moyen de régulation de vitesse réduit à chaque fois la vitesse de rotation du moyen d'entraînement (10) près des positions de fin de course des bras d'essuie-glace (18, 20).

8. Ensemble d'entraînement selon l'une quelconque des revendications précédentes,
**caractérisé en ce qu'**
au moins deux bras d'essuie-glace (18, 20) sont couplés par une biellette (30).

9. Ensemble d'entraînement selon la revendication 8,
**caractérisé en ce que**
les deux bras d'essuie-glace (18, 20) ont des trajectoires de même sens.

10. Ensemble d'entraînement selon l'une quelconque des revendications précédentes,
**caractérisé en ce qu'**
au moins les deux bras d'essuie-glace (18, 20) ont une trajectoire sensiblement parallèle.
